# EUROPEAN PATENT SPECIFICATION

(11) **EP 3 634 027 B1**
(45) Date of publication and mention of the grant of the patent: **02.12.2026**
(21) Application number: 18805619.6
(22) Date of filing: 07.05.2018
(51) Int. Cl.: H04W 36/00

(54) **METHOD FOR DETERMINING COVERAGE LEVEL, BASE STATION AND TERMINAL**
VERFAHREN ZUR BESTIMMUNG DES DECKUNGSGRADES, BASISSTATION UND ENDGERÄT
PROCÉDÉ DE DÉTERMINATION DE NIVEAU DE COUVERTURE, STATION DE BASE ET TERMINAL

(30) Priority: 26.05.2017 CN 201710389056
(43) Date of publication of application: 08.04.2020
(73) Proprietor: ZTE Corporation, Shenzhen, Guangdong 518057 (CN)
(72) Inventor: ZHAO, Yan, Shenzhen Guangdong 518057 (CN); LIU, Na, Shenzhen Guangdong 518057 (CN); NIU, Kang, Shenzhen Guangdong 518057 (CN)
(74) Representative: Canzler & Bergmeier Patentanwälte Partnerschaft mbB
(86) International application number: PCT/CN2018/085809
(87) International publication number: WO 2018/214720

(56) References cited:
- WO-A1-2016/065640
- WO-A1-2016/171445
- WO-A1-2017/024526
- WO-A1-2017/075805
- CN-A- 105 379 336
- CN-A- 105 637 969
- US-A1- 2015 105 084
- NOKIA NETWORKS: "Connected mobility for Rel13 UEs in EC mode", vol. RAN WG2, no. Anaheim, USA; 20151116 - 20151120, 16 November 2015 (2015-11-16), XP051005854, Retrieved from the Internet <URL:http://www.3gpp.org/ftp/Meetings_3GPP_SYNC/RAN2/Docs/> [retrieved on 20151116]
- "3rd Generation Partnership Project; Technical Specification Group Radio Access Network; Evolved Universal Terrestrial Radio Access (E-UTRA); Radio Resource Control (RRC); Protocol specification (Release 13)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V13.2.0, 11 July 2016 (2016-07-11), pages 1 - 623, XP051123115, [retrieved on 20160711]

## Description

### FIELD OF THE DISCLOSURE

The present disclosure relates to the field of communication technologies, and in particular, to a method for determining a coverage level, a base station, and a terminal.

### BACKGROUND

The eMTC (enhanced Machine-Type Communications) technology is a communication method introduced in 3GPP (3rd Generation Partnership Project) protocol version Rel-13, and is an enhanced communication for machine-type users.

However, in the current 3GPP (3rd Generation Partnership Project) standard protocol, the target base station determines the coverage level of the terminal according to the random access preamble when the terminal initiates contention-based random access, and there is no effective way to acquire the coverage level of the terminal in advance, so that appropriate physical resources and repetition times cannot be configured for the terminal in advance, resulting in a low success rate of accessing the terminal to the target base station.

Document WO2017/075805 discloses a target base station determining a coverage enhancement, CE, level based on UE measurements which are received from the serving base station and on CE level criteria/thresholds. The target base station transmits a handover, HO, request acknowledgement comprising random access information which includes CE related PRACH resources. The UE then performs random access using the PRACH resources received.

Document WO2017024526 discloses the situation wherein the CE mode changes between the time the decision to make a HO is taken on the network side and the time the HO is executed by the UE. The target base station sends to the UE dedicated preambles determined based on the CE level of the UE. If the UE knows that its EC level has changed, the UE initiates a contention random access by selecting a preamble that matches its current CE level. The target base station receives an indication of change of CE level of the UE, and updates the resource management based on the change in the CE level.

### SUMMARY

The present invention relates to a method, a system and a base station as set forth in claims 1, 3 and 7. Further embodiments are set forth in the dependent claims.

### BRIEF DESCRIPTION OF THE DRAWINGS

FIG. 1 is a schematic diagram of a network architecture applicable in an embodiment of the present disclosure;
FIG. 2 is a flowchart schematically illustrating a method for determining a coverage level according to an embodiment of the present disclosure;
FIG. 3 is a flowchart schematically illustrating another method for determining a coverage level according to an embodiment of the present disclosure;
FIG. 4 is a flowchart schematically illustrating an X2 interface switching in the method for determing a coverage level according to the embodiment of the present disclosure;
FIG. 5 is a flowchart schematically illustrating an S1 interface switching in the method for determing a coverage level according to the embodiment of the present disclosure;
FIG. 6 is a flowchart schematically illustrating another method for determining a coverage level according to an embodiment of the present disclosure;
FIG. 7 is a flowchart schematically illustrating another method for determining a coverage level according to an embodiment of the present disclosure;
FIG. 8 is a block diagram schematically illustrating a base station according to an embodiment of the present disclosure;
FIG. 9 is a block diagram schematically illustrating a base station according to another embodiment of the present disclosure;
FIG. 10 is a block diagram schematically illustrating a base station according to another embodiment of the present disclosure;
FIG. 11 is a block diagram schematically illustrating a terminal according to another embodiment of the present disclosure;
FIG. 12 is a block diagram schematically illustrating a terminal according to an embodiment of the present disclosure; and
FIG. 13 is a block diagram schematically illustrating a terminal according to another embodiment of the present disclosure.

### DETAILED DESCRIPTION OF THE EMBODIMENTS

The disclosure will be described in detail with reference to the accompanying drawings and specific embodiments such that the technical problems, technical solutions and advantages of the present disclosure become apparent.

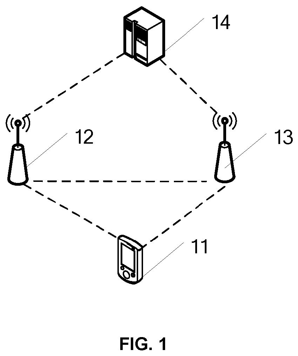

FIG. 1 is a schematic diagram of a network architecture applicable in an embodiment of the present disclosure. The network architecture may include: a terminal 11, a source base station 12, a target base station 13 and a core network device 14.

Here, the terminal 11 can establish communication with the source base station 12 and the target base station 13, respectively. Communication may be established between the source base station 12 and the target base station 13 directly or through the core network device 14. When the communication is established between the source base station 12 and the target base station 13 directly, the source base station 12 and the target base station 13 may establish communication via an X2 interface. It should be noted that, in the embodiment of the present disclosure, a specific type of interface through which the communication is established between the source base station 12 and the target base station 13 is not limited. When the communication is established between the source base station 12 and the target base station 13 through the core network device 14, communication beween the source base station 12 and the core network device 14 and between the target base station 13 and the core network device 14 may be established through an S1 interface. It should be noted that, in the embodiment of the present disclosure, a specific type of interface through which the source base station 12 and the core network device 14, and a specific interface type through which the communication is established between the target base station 13 and the core network device 14 is not limited.

Here, the terminal 11 may be a terminal side devices such as a Mobile Phone, a Tablet Personal Computer, a Laptop Computer, a Personal Digital Assistant (PDA), a Mobile Internet Device (MID), or a Wearable Device, but is not limited thereto. The source base station 12 and the target base station 13 may be an eLTE base station or a 5G base station, but are not limited thereto. In addition, the source base station 12 and the target base station 13 may be base stations of different RATs. Specific functions of the source base station 12 and the target base station 13 will be described in detail by way of embodiments below. The core network device 14 may be a 5G core network, but is not limited thereto.

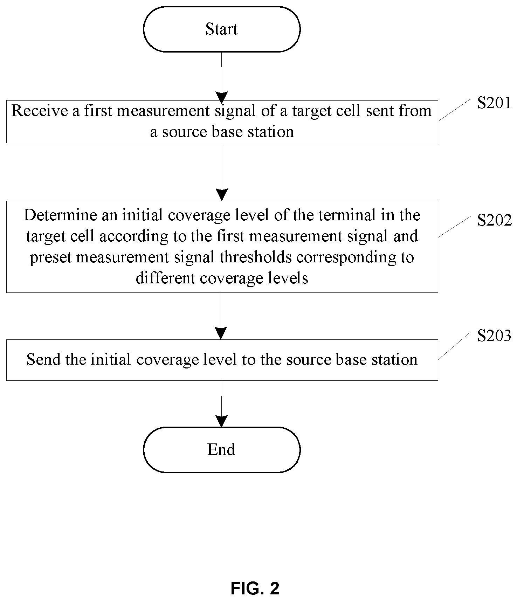

As shown in FIG. 2, a method for determining a coverage level according to an embodiment of the present disclosure is applied to a target base station, and includes the following steps.

Step S201, receiving a first measurement signal of a target cell sent from a source base station.

In the embodiment of the present disclosure, the source base station issues measurement information to the terminal, wherein the measurement information may include, but is not limited to: an object to be measured by the terminal, a cell list, a report mode, a measurement indication, an event parameter, for example. The terminal executes the measurement action according to the indication of the measurement information. For example, the terminal measures parameters such as reference signal received power (hereinafter, referred to as RSRP) and/or reference signal received quality (hereinafter, referred to as RSRQ) of all neighboring cells except for the blacklisted cell of the target cell at a certain frequency point according to the indication of the measurement information, and uses the parameters as the first measurement signal of the target cell. Of course, in other embodiments, the terminal may acquire the first measurement signal of the terminal in the target cell in other manners, which is not limited herein.

When the measurement report condition is satisfied, the terminal transmits a measurement report as the first measurement signal to the source base station. The measurement report may include, but is not limited to, a measurement signal of a serving cell and a measurement signal of a neighboring cell. The measurement signal may be a measurement result of parameters such as RSRP and RSRQ.

The source base station executes handover judgment according to the measurement report from the terminal, i.e., whether the terminal needs to be handed over is judged according to the measurement report from the terminal. In one example, the source base station judges the presence of a target neighboring cell having a first measurement signal strength higher than a first measurement signal strength of a serving cell of the terminal, wherein if present, then a handover is determined, a cell having the highest first measurement signal strength is selected from the target neighboring cells as a target cell for handover, and a first measurement signal of a target cell is sent to a target base station corresponding to the target cell. Of course, in other embodiments, the source base station may also judge whether the terminal needs to execute handover in other manners, which is not limited herein.

Here, the first measurement signal of the target cell may be carried in an optional cell (information element), such as TargetCellRsrpResult_r13, transmitted from the source base station to the target base station. As such, under a scene based on blind handover, the cell can be selected not to be carried, such that the process of blind handover is not influenced. The first measurement signal of the target cell may also be carried in a candidate cell information list (Candidate Cell Info List) in a handover request message, and is sent from the source base station to the target base station. Further, if the list has been filled with other neighboring cells used for other functions and having the strongest first measurement signal at the same frequency point as the target cell according to the protocol requirement, the first measurement signal of the target cell may be filled in the last of the list in order not to affect the normal use of other functions. Of course, in other embodiments, the source base station may also carry the measurement signal in the handover request message in other manners to send it to the target base station, which is not limited herein.

Step S202, determining an initial coverage level of the terminal in the target cell according to the first measurement signal and preset measurement signal thresholds corresponding to different coverage levels.

In this step, after receiving the first measurement signal of the terminal in the target cell, the target base station performs receipt judgment by checking the presence of access resource. If the access resource is present, then the receipt is determined and the terminal is allowed to establish communication with the access resource, and the initial coverage level of the terminal in the target cell is determined according to the first measurement signal and the preset measurement signal thresholds corresponding to different coverage levels so as to reserve physical resource and repetition times corresponding to a coverage level for the terminalaccording to the coverage level specified by the initial coverage level.

In one example, the target base station presets thresholds of measurement signals corresponding to different coverage levels, the measurement signals are divided into several segments by the thresholds, and the segments of each measurement signal correspond to different coverage levels. For convenience of description, the measurement signal is RSRP as an example, but the present disclosure does not limit the parameters of the measurement signal. The target base station presets RSRP thresholds of -120 db, -100 db and -80 db, which divide the RSRP into 4 segments, i.e., a segment less than or equal to -120 db (hereinafter referred to as a first segment), a segment greater than -120 db but less than or equal to -100 db (hereinafter referred to as a second segment), a segment greater than -100 db but less than or equal to -80 db (hereinafter referred to as a third segment) and a segment greater than -80 db (hereinafter referred to as a fourth segment), wherein the first segment corresponds to a coverage level of 0, the second segment corresponds to a coverage level of 1, the third segment corresponds to a coverage level of 2 and the fourth segment corresponds to a coverage level of 3. If the terminal measures that the RSRP under the target base station is -95 db, the RSRP is in a third segment, and the corresponding coverage level is 2. Of course, in other embodiments, the target base station may determine the coverage level in other manners according to the measurement signal, which is not limited herein.

Step S203, sending the initial coverage level to the source base station.

In the embodiment of the disclosure, after determining the initial coverage level of the terminal in the target cell, the target base station sends the initial coverage level to the source base station, such that the terminal receives the initial coverage level through the source base station and initiates random access to physical resources corresponding to the coverage level specified by the initial coverage level in the target base station. In one example, a terminal receives an initial coverage level of the terminal in the target cell sent from the source base station, obtains a coverage level according to the initial coverage level, and initiates contention-based random access to a physical resource corresponding to the coverage level in the target base station by using a random access preamble corresponding to the coverage level. For example: if the terminal obtains the initial coverage level of 2, the terminal may initiate random access to the physical resource corresponding to the coverage level of 2 in the target base station when performing handover. If the access is successful, the terminal completes the handover; and if the access fails, the terminal initiates random access to the physical resource corresponding to the coverage level again in a power climbing mode until maximum access times are reached.

In this embodiment, the applicable network architecture is shown in FIG. 1, but is not limited to the network architecture shown in FIG. 1.

Using the method for determining a coverage level according to this embodiment, including: receiving a first measurement signal of a target cell sent from a source base station; determining an initial coverage level of the terminal in the target cell according to the first measurement signal and preset measurement signal thresholds corresponding to different coverage levels; and sending the initial coverage level to the source base station, the target base station can acquire the coverage level of the terminal in the target cell in advance and configures physical resources and repetition times corresponding to the coverage level for the terminal in advance according to the coverage level. Therefore, when the terminal initiates random access to the physical resource corresponding to the coverage level in the target base station based on the coverage level, the success rate of accessing the target base station can be effectively improved.

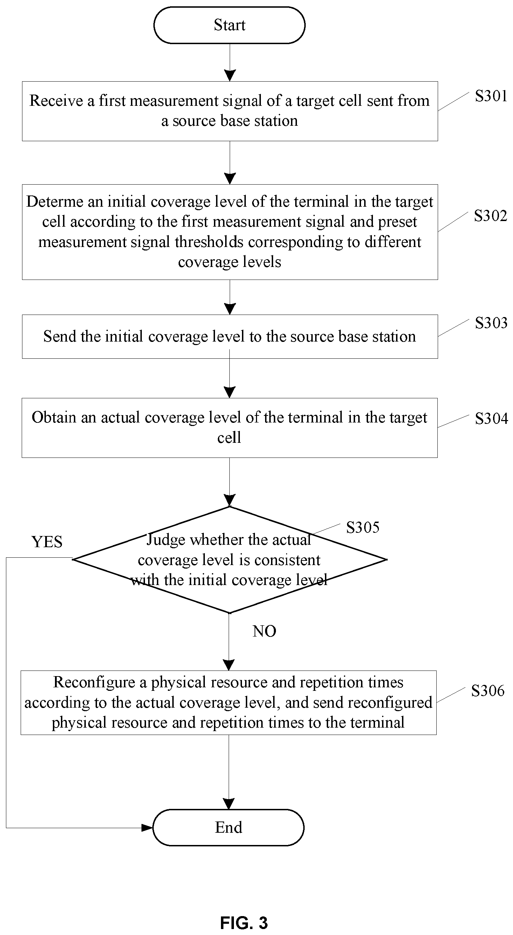

As shown in FIG. 3, another method for determining a coverage level according to an embodiment of the present disclosure, applicable to a target base station, includes the following steps.

Step S301, receiving a first measurement signal of a target cell sent from a source base station.

Step S302, determining an initial coverage level of the terminal in the target cell according to the first measurement signal and preset measurement signal thresholds corresponding to different coverage levels.

Step S303, sending the initial coverage level to the source base station.

Hererin, Step S301, Step S302, and Step S303 in this embodiment are the same as Step S201, Step S202 and Step S203 in the above embodiment, respectively. To avoid repeated explanation, reference can be made to the description in the above embodiment, which will not be described herein again.

Step S304, obtaining an actual coverage level of the terminal in the target cell.

In this step, if the terminal initiates a contention-based random access to the target base station, the target base station may autonomously determine an actual coverage level of the terminal in the target cell according to a random access preamble adopted when the terminal initiates the contention-based random access and a random access preamble range corresponding to different coverage levels preset by the target base station; if the terminal initiates a non-contention based random access to the target base station or the coverage level of the terminal changes due to a certain reason such as a change of a wireless environment (for example, movement of a mobile terminal), the target base station may obtain the actual coverage level of the terminal in the target cell by receiving the actual coverage level sent from the terminal. In one example, the terminal may further obtain an actual coverage level of the terminal in the target cell after the handover, and send the actual coverage level to the target base station when judging that the actual coverage level is not consistent with the coverage level determined in Step 302.

Step S305, judging whether the actual coverage level is consistent with the initial coverage level.

In this step, it is determined whether a correction process of the coverage level needs to be triggered by judging whether the actual coverage level is consistent with the initial coverage level.

If the actual coverage level is consistent with the initial coverage level, the correction process of the coverage level is not triggered; if the actual coverage level is not consistent with the initial coverage level, then Step S306 is executed.

Step S306, if the actual coverage level is not consistent with the initial coverage level, reconfiguring a physical resource and repetition times according to the actual coverage level, and sending reconfigured physical resource and repetition times to the terminal.

In this step, since the actual coverage level is not consistent with the initial coverage level, the target base station needs to correct the coverage level of the terminal and initiate a handover procedure in the cell. Specifically, the base station configures the physical resources and repetition times according to the actual coverage level of the terminal in the target cell, and sends the reconfigured physical resources and repetition times to the terminal through a handover command message. As such, the terminal initiates random access to the target base station according to the reconfigured physical resources and repetition times, thereby improving the success rate of random access and achieving the purpose of enhancing coverage. It should be noted that, since the handover of the coverage level of the terminal in the cell does not need to update the root key K_{ASME}, the key Change Indicator in the handover command message may be set to "false".

Optionally, Step S304 includes: receiving a random access preamble sent from the terminal, and determining an actual coverage level of the terminal in the target cell according to the random access preamble and a preset random range of the random access preamble corresponding to different coverage levels.

This step is applied to a scenario in which the terminal initiates a contention-based random access to the target base station. After the successful random access of the terminal, i.e., after the handover, the target base station determines the actual coverage level of the terminal in the target cell according to the random access preamble adopted when the terminal initiates the contention-based random access and the preset random access preamble range corresponding to different coverage levels.

Optionally, Step S304 includes: receiving a notification message sent from the terminal, wherein the notification message carries an actual coverage level of the terminal in the target cell.

The step can be applied to a scenario in which the terminal initiates a non-contention based random access to the target base station and also to a non-handover scenario, in which, for example, the terminal notices that the coverage level changes due to a change of the wireless environment. In particular, when the terminal moves from a coverage center of signal to an edge in the target cell, the signal value changes and thus the coverage level changes, but the handover threshold is not triggered. However, the scenario is not limited thereto.

In the scenario in which the terminal initiates a non-contention based random access to the target base station, after the successful random access of the terminal, i.e., after the handover, the terminal measures a second measurement signal of the target cell, and determines an actual coverage level of the terminal in the target cell according to the second measurement signal and measurement signal thresholds corresponding to different coverage levels, wherein the measurement signal thresholds corresponding to different coverage levels can be obtained by the terminal through broadcasting or can be obtained by the terminal from a handover command message sent from the target base station.

If the terminal notices that the actual coverage level of the target cell is not consistent with the initial coverage level, then the terminal sends a notification message to the target base station and carries the actual coverage level in the notification message. The notification message may be a new air interface RRC (Radio Resource Control) signaling message, or may be a current actual coverage level indication cell of a terminal added in an existing RRC signaling message. However, the notification message is not limited thereto.

In the scenario in which the terminal notices that the coverage level changes due to a change of the wireless environment, after the terminal is successfully accessed or handed over or reestablished to the target base station, the target base station configures a measurement period of a measurement signal of a serving cell for the terminal through an RRC message, or the terminal performs periodic measurement on the measurement signal of the serving cell by itself to monitor whether the coverage level of the terminal changes.

After measuring the measurement signal of the terminal in the target cell each time, the terminal judges the current coverage level, i.e., the actual coverage level, of the terminal in the target cell according to the measurement signal and the measurement signal threshold corresponding to different coverage levels configured by the base station or obtained through broadcasting. If the actual coverage level is not consistent with the initial coverage level, then the terminal sends a notification message to the target base station and carries the actual coverage level in the notification message. The notification message may be a new air interface RRC signaling message, or may be a current actual coverage level indication cell of the terminal added in an existing RRC signaling message. However, the notification message is not limited thereto.

Optionally, Step S304 includes: receiving a measurement report sent from the terminal, wherein the measurement report carries a second measurement signal of the target cell, and determining an actual coverage level of the terminal in the target cell according to the second measurement signal and preset measurement signal thresholds corresponding to the different coverage levels.

This step is similar to the above step of "receiving the notification message sent from the terminal, wherein the notification message carries the actual coverage level of the terminal in the target cell". Reference can be made to the description of the above step and details thereof will be omitted herein.

Optionally, the first measurement signal is carried in an optional cell.

The first measurement signal of the target cell may be carried in an optional cell, such as an optional cell TargetCellRsrpResult _ r13, and be sent from the source base station to the target base station. As such, in a scenario based on blind handover, the cell may be selected not to be carried, and thus the process of blind handover is not affected. Of course, in other embodiments, the source base station may also carry the measurement signal in a handover request message in other manners to send it to the target base station, which is not limited herein.

Optionally, Step S301 includes: receiving a first measurement signal of a target cell sent from a source base station through an X2 interface or a core network device; step S303 includes: upon receipt, sending the initial coverage level to the source base station through the X2 interface or the core network device.

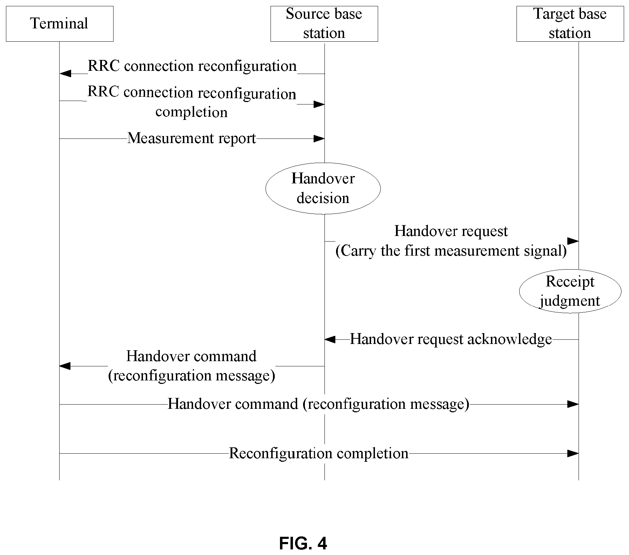

Referring to FIG. 4, when the terminal performs handover based on the X2 interface, the source base station issues measurement information to the terminal through a radio resource control Connection Reconfiguration (RRC Connection Reconfiguration) message, wherein the measurement information may include, but is not limited to, an object to be measured by the terminal, a cell list, a reporting mode, a measurement indicator, an event parameter, for example.

After the measurement action based on the measurement information is completed, the terminal sends an RRC connection reconfiguration completion message to the source base station.

When the measurement report condition is satisfied, the terminal sends a measurement report to the source base station, wherein the measurement report may include, but is not limited to, a measurement signal of a serving cell and a measurement signal of a neighboring cell. The measurement signal may be a measurement result of parameters such as RSRP and RSRQ.

The source base station executes a handover decision according to the measurement signal reported by the terminal, namely, judges whether the terminal needs to be handed over according to the measurement signal reported by the terminal. After the handover is acknowledged and a target base station to be handed over by the terminal is determined, a handover request message is sent to the target base station through an X2 interface. An RRC context message cell carried in the handover request message contains handover preparation information, which is used to request the target base station to prepare switching resources. The handover request message carries a first measurement signal of the terminal in a target cell. The X2 interface is used to implement communication between base stations and support interaction of signaling information between the base stations. In other embodiments, of course, communication may also be established between the base stations through other interfaces.

After receiving the handover request information, the target base station executes receipt judgment by checking the presence of access resources, and if the access resources are present, the receipt is acknowledged and the terminal is allowed to establish communication with the target base station. After the receipt is acknowledged, the target base station determines the coverage level of the terminal under the target base station according to a first measurement signal of the terminal in the target cell and preset measurement signal thresholds corresponding to different coverage levels.

After the coverage level is determined, the target base station sends a handover request acknowledge message to the source base station through an X2 interface, which is used to reserve resources for the terminal to be handed over, and the handover request acknowledge message carries the coverage level. In this way, the source base station may receive the handover request acknowledge message sent from the target base station through the X2 interface, and acquire the coverage level.

The source base station sends a handover command message (or a reconfiguration message) to the terminal, wherein the handover command message includes an initial coverage level cell, and the initial coverage level cell carries an initial coverage level. As such, the terminal can accurately acquire the coverage level of the terminal in the target cell according to the initial coverage level after receiving the handover command message, and initiate random access to a physical resource corresponding to the coverage level in the target base station.

Since the initial coverage level cell carries the accurate coverage level of the terminal under the target base station, the PRACH configuration message can no longer carry the optional cell RSRP-threshold prachinfolist _ r13 for carrying the measurement signal thresholds corresponding to different coverage levels, thereby reducing the air interface signaling overhead to a certain extent.

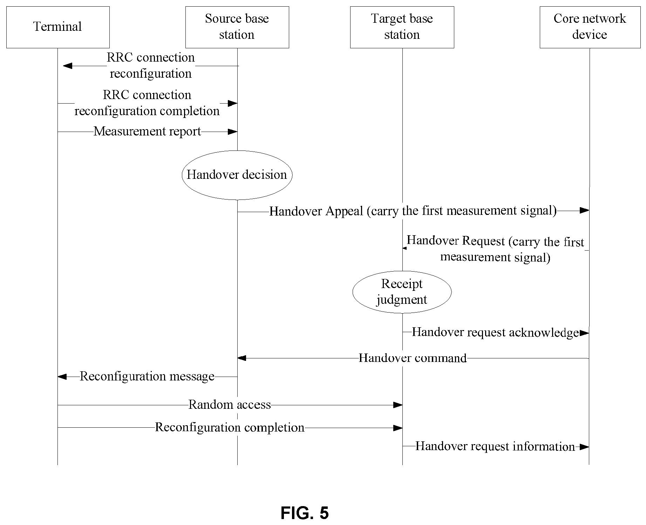

Referring to FIG. 5, when the terminal performs handover based on the S1 interface, after acknowledging the handover and determining the target base station to which the terminal is handed over, the source base station sends a handover appeal message to the core network device through the S1 interface, so as to request the target base station to prepare for resource handover through the core network device, wherein the handover appeal message carries a first measurement signal of the terminal in the target cell.

The core network device sends a handover request message to the target base station through the S1 interface, so as to request the target base station to prepare handover resources, wherein the handover request message carries the first measurement signal of the terminal in the target cell. In one example, an optional cell, such as an optional cell TargetCellRsrpResult _ r13, may be newly added to the handover appeal message for carrying the first measurement signal of the terminal in the target cell. As such, in a blind handover-based scenario, the cell may be selected not to be carried without affecting the procedure of the blind handover. Of course, in other embodiments, the source base station can also carry the measurement signal in the handover appeal message in other manners, and send the measurement signal to the target base station, which is not limited herein. The S1 interface is used to implement communication between the base station and the core network device, and support interaction of signaling information between the base station and the core network device, Of course, in other embodiments, communication may also be established between the base station and the core network device through other interfaces.

After receiving the handover request information, the target base station executes receipt judgment by checking the presence of access resource, and if the access resource is present, then the receipt is determined and the terminal is allowed to establish communication with the target base station. After the receipt is acknowledged, the target base station determines the initial coverage level of the terminal under the target base station according to the measurement signal, and sends a handover request acknowledgement message to the core network device through an S1 interface, so as to reserve resources for the handed over terminal, wherein the handover request acknowledgement message carries the initial coverage level; after receiving the handover request acknowledgement message, the core network device sends a handover command message to the source base station through the S1 interface, wherein the handover command message carries the initial coverage level.

The source base station sends a reconfiguration message to the terminal, wherein the reconfiguration message includes an initial coverage level cell used for carrying the initial coverage level received by the source base station. As such, the terminal can accurately acquire the coverage level of the terminal in the target cell according to the initial coverage level after receiving the reconfiguration message, and initiate random access to the physical resource corresponding to the coverage level in the target base station.

In this embodiment, the network architecture applicable to FIG. 1, is not limited to the network architecture shown in FIG. 1.

It will be appreciated that this step is equally applicable to the embodiments described above.

With the method for determining the coverage level in this embodiment, the target base station can obtain the coverage level of the terminal in the target cell in advance, and configure the physical resource and the repetition times corresponding to the coverage level for the terminal in advance according to the coverage level. As such, when the terminal initiates random access to the physical resource corresponding to the coverage level in the target base station based on the coverage level, the success rate of accessing the target base station can be effectively improved. Meanwhile, when the target base station detects that the coverage level of the terminal in the target cell changes, the target base station triggers the correction process of the coverage level of the terminal, so that the success rate of accessing the target base station can be improved, and the purpose of enhancing the coverage can be achieved.

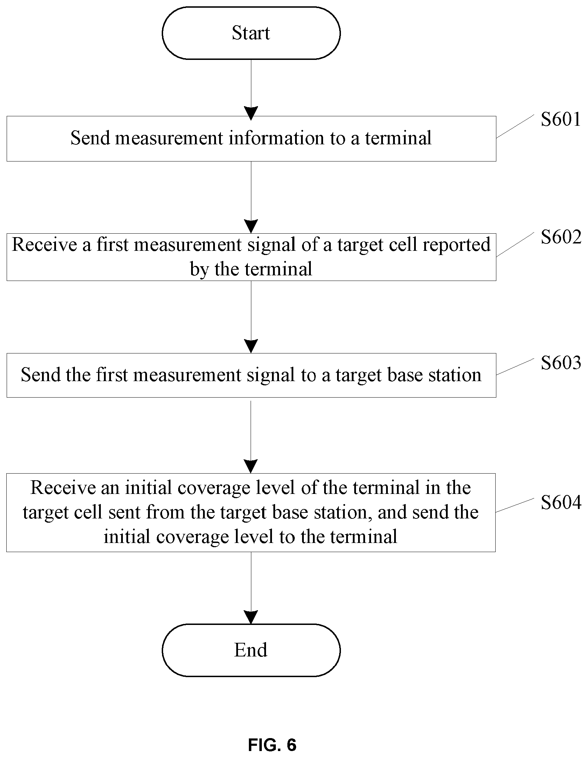

As shown in FIG. 6, there is provided another method for determining a coverage level, applied to a source base station, in an embodiment of the present disclosure, including steps of:
Step S601, sending measurement information to a terminal;
Step S602, receiving a first measurement signal of a target cell reported by the terminal;
Step S603, sending the first measurement signal to a target base station; and
Step S604, receiving an initial coverage level of the terminal in the target cell sent from the target base station, and sending the initial coverage level to the terminal.

Optionally, the first measurement signal is carried in an optional cell.

Optionally, Step S603 includes: after acknowledging a handover and determining a target base station to be handed over, sending the first measurement signal to the target base station through an X2 interface or a core network device; and Step S604 includes: receiving the initial coverage level of the terminal in the target cell sent from the target base station, through the X2 interface or the core network device.

It should be noted that this embodiment is an implementation of a source base station corresponding to an embodiment of a target base station, and specific implementation and beneficial effects of this embodiment may specifically refer to the description in the embodiment of the target base station. Description thereof will be omitted herein to avoid repetition.

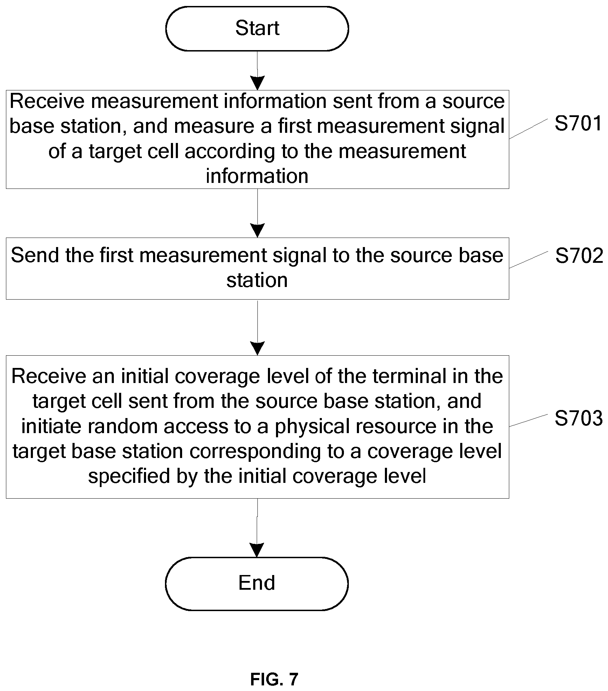

As shown in FIG. 7, there is provided another method for determining a coverage level in an embodiment of the disclosure, applied to a terminal and including steps of:
Step S701, receiving measurement information sent from a source base station, and measuring a first measurement signal of a target cell according to the measurement information;
Step S702, sending the first measurement signal to the source base station; and
Step S703, receiving an initial coverage level of the terminal in the target cell sent from the source base station, and initiating random access to a physical resource in the target base station corresponding to a coverage level specified by the initial coverage level.

Optionally, Step S703 includes: receiving an initial coverage level of the terminal in the target cell sent from the source base station, obtaining a coverage level according to the initial coverage level, and initiating contention-based random access to a physical resource corresponding to the coverage level in the target base station by adopting a random access preamble corresponding to the coverage level.

Optionally, after Step S703, the method further includes: measuring a second measurement signal of the target cell; determining an actual coverage level of the terminal in the target cell according to the second measurement signal and received measurement signal thresholds corresponding to different coverage levels; judging whether the actual coverage level is consistent with the initial coverage level; and if the actual coverage level is not consistent with the initial coverage level, sending a notification message to the target base station, wherein the notification message carries the actual coverage level.

Optionally, after Step S703, the method further includes: measuring a second measurement signal of the target cell; determining the actual coverage level of the terminal in the target cell according to the second measurement signal and the received measurement signal thresholds corresponding to different coverage levels; judging whether the actual coverage level is consistent with the initial coverage level; and if the actual coverage level is not consistent with the initial coverage level, sending a measurement report to the target base station, wherein the measurement report carries the second measurement signal.

It should be noted that this embodiment is an implementation of the terminal corresponding to the embodiment of the target base station, and specific implementation and beneficial effects of this embodiment may specifically refer to the description in the embodiment of the target base station. Description thereof will be omitted herein to avoid repetition.

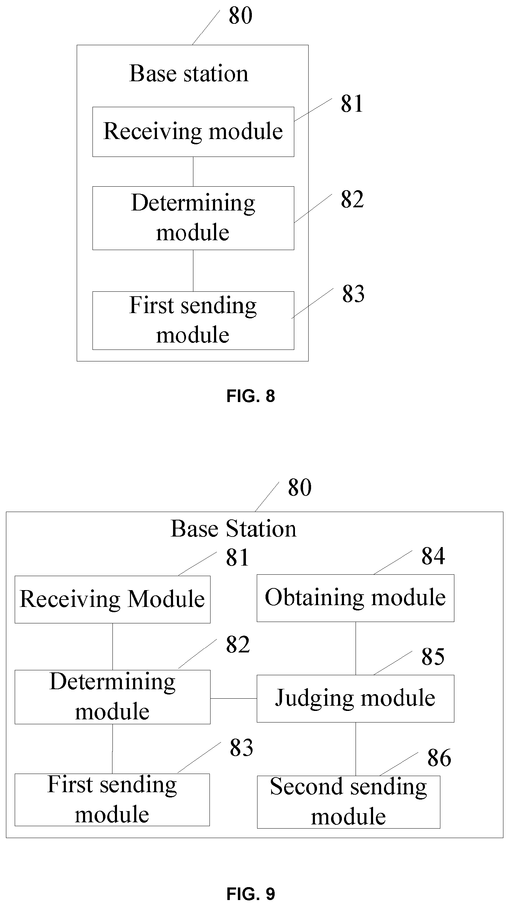

FIG. 8 is a block diagram schematically illustrating a base station according to an embodiment of the present disclosure. The base station 80 includes a receiving module 81, a determining module 82, and a first sending module 83.

The receiving module 81 is configured to receive a first measurement signal of a target cell sent from a source base station; the determining module 82 is configured to determine an initial coverage level of the terminal in the target cell according to the first measurement signal and preset measurement signal thresholds corresponding to different coverage levels; the first sending module 83 is configured to send the initial coverage level to the source base station.

Optionally, as shown in FIG. 9, the base station 80 further includes: an obtaining module 84, configured to obtain an actual coverage level of the terminal in the target cell after the first sending module 83 sends the initial coverage level to the source base station; a judging module 85, configured to judge whether the actual coverage level is consistent with the initial coverage level; and a second sending module 86, configured to, in the case where the actual coverage level is not consistent with the initial coverage level, reconfigure a physical resource and repetition times according to the actual coverage level, and send a reconfigured physical resource and repetition times to the terminal.

Optionally, the obtaining module 84 is configured to receive a random access preamble sent from the terminal, and determine an actual coverage level of the terminal in the target cell according to the random access preamble and a preset range of the random access preamble corresponding to different coverage levels.

Optionally, the obtaining module 84 is configured to receive a notification message sent from the terminal, wherein the notification message carries the actual coverage level of the terminal in the target cell.

Optionally, the obtaining module 84 is configured to receive a measurement report sent from the terminal, wherein the measurement report carries a second measurement signal of the target cell, and determine an actual coverage level of the terminal in the target cell according to the second measurement signal and preset measurement signal thresholds corresponding to the different coverage levels.

Optionally, the first measurement signal is carried in an optional cell.

Optionally, the receiving module 81 is configured to receive, through an X2 interface or a core network device, the first measurement signal of the target cell sent from the source base station; and the first sending module 83 is configured to send the initial coverage level to the source base station through the X2 interface or the core network device after the base station 80 confirms receipt.

The base station 80 can implement each process in the methodic embodiments in FIGS. 2 and 3, and can achieve the same beneficial effects. The description thereof will be omitted herein to avoid repetition.

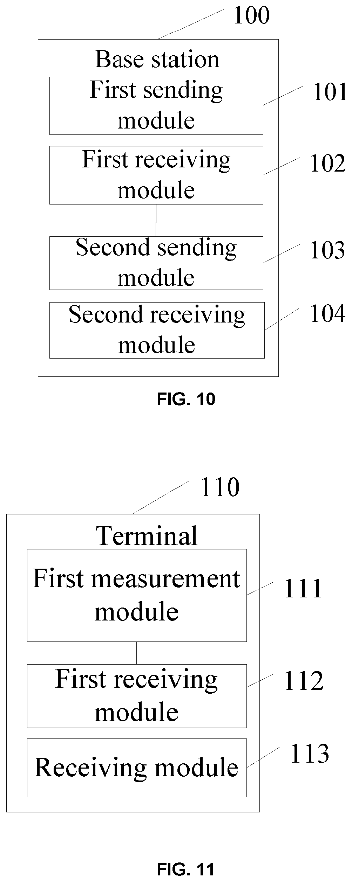

FIG. 10 shows a block diagram schematically illustrating a base station according to another embodiment of the present disclosure. The base station 100 includes a first sending module 101, a first receiving module 102, a second sending module 103, and a second receiving module 104.

The first sending module 101 is configured to send measurement information to a terminal; the first receiving module 102 is configured to receive a first measurement signal of a target cell reported by the terminal; the second sending module 103 is configured to send the first measurement signal to a target base station; and the second receiving module 104 is configured to receive an initial coverage level of the terminal in the target cell sent from the target base station, and send the initial coverage level to the terminal.

Optionally, the first measurement signal is carried in an optional cell.

Optionally, the second sending module 103 is configured to, after acknowledging a handover and determining a target base station to be handed over, send the first measurement signal to the target base station through an X2 interface or a core network device; and the second receiving module 104 is configured to receive, through the X2 interface or the core network device, the initial coverage level of the terminal in the target cell sent from the target base station.

The base station 100 can implement each process in the methodic embodiment of FIG. 6 and achieve the same beneficial effects. The description thereof will be omitted herein to avoid repetition.

FIG. 11 shows a block diagram schematically illustrating a terminal according to an embodiment of the present disclosure. The terminal 110 includes a first measurement module 111, a first sending module 112, and a receiving module 113.

The first measurement module 111 is configured to receive measurement information sent from a source base station, and measure a first measurement signal of a target cell according to the measurement information; a first sending module 112 is configured to send the first measurement signal to the source base station; and the receiving module 113 is configured to receive an initial coverage level of the terminal in the target cell sent from the source base station, and initiate random access to a physical resource in the target base station corresponding to a coverage level specified by the initial coverage level.

Optionally, the receiving module 113 is configured to receive the initial coverage level of the terminal in the target cell sent from the source base station, obtain a coverage level according to the initial coverage level, and initiate contention-based random access to the physical resource corresponding to the coverage level in the target base station by adopting a random access preamble corresponding to the coverage level.

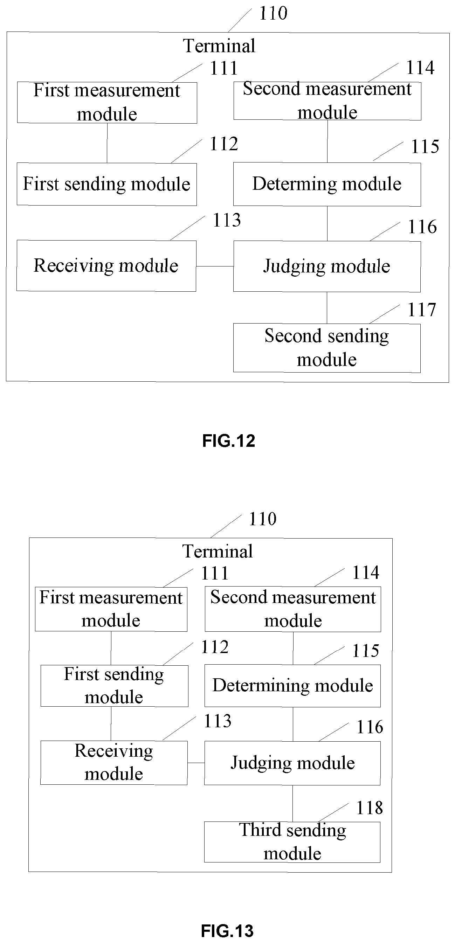

Optionally, as shown in FIG. 12, the terminal 110 further includes: a second measurement module 114, configured to measure a second measurement signal of the target cell after the receiving module initiates the random access to the physical resource in the target base station corresponding to the coverage level specified by the initial coverage level; a determining module 115, configured to determine, according to the second measurement signal and received measurement signal thresholds corresponding to different coverage levels, an actual coverage level of the terminal in the target cell; a judging module 116, configured to judge whether the actual coverage level is consistent with the initial coverage level; and a second sending module 117, configured to send a notification message to the target base station in the case that the actual coverage level is not consistent with the initial coverage level, wherein the notification message carries the actual coverage level.

Optionally, as shown in FIG. 13, the terminal 110 includes the first measurement module 111, the first sending module 112, the receiving module 113, the second measurement module 114, the determining module 115, and the judging module 116 shown in FIG. 12, and further includes: a third sending module 118, configured to send a measurement report to the target base station in the case that the actual coverage level is not consistent with the initial coverage level, wherein the measurement report carries the second measurement signal.

The terminal 110 can implement each process in the method embodiment of FIG. 7 and achieve the same beneficial effects. Decription thereof will be omitted herein to avoid repetition.

Those skilled in the art would appreciate that all or part of the steps of the method implementing the above embodiments may be implemented by hardware associated with program instructions, and the program may be stored in a computer readable medium. The computer readable medium may be provided in the base station and the terminal, respectively, in the above embodiments, and the programs, when executed, implement the determination methods of the coverage level as described in the above embodiments.

The storage medium includes, for example, a Read-Only Memory (ROM), a Random Access Memory (RAM), a magnetic disk or an optical disk.

The embodiments of the present disclosure have been described above. It should be understood that various improvements and modifications may be made to one skilled in the art without departing from the disclosure of the present disclosure.

## Claims

1. A method for determining coverage level, performed by a target base station (13), **characterized in that** the method comprises steps of:
receiving (S201) a first measurement report from a source base station, the first measurement report including a measurement result of parameters of a measurement signal of a target cell;
determining (S202) an initial coverage level of a terminal in the target cell according to the first measurement report and preset measurement signal thresholds corresponding to different coverage levels;
sending (S203) the initial coverage level to the source base station;
obtaining (S304) an actual coverage level of the terminal in the target cell; judging (S305) whether the actual coverage level is consistent with the initial coverage level; and in the case where the actual coverage level is not consistent with the initial coverage level, reconfiguring (S306) a physical resource and repetition times according to the actual coverage level, and sending a reconfigured physical resources and the repetition times to the terminal;
wherein the step of obtaining (304) the actual coverage level of the terminal in the target cell comprises: receiving a random access preamble sent from the terminal, and determining the actual coverage level of the terminal in the target cell according to the random access preamble and a preset range of the random access preamble corresponding to different coverage levels.

2. The method of claim 1, wherein the step of receiving the first measurement report of the target cell sent from the source base station comprises:
receiving the first measurement report of the target cell sent from the source base station through the X2 interface or the core network device (14); and
the step of sending the initial coverage level to the source base station comprises:
after receipt is acknowledged, sending the initial coverage level to the source base station through the X2 interface or the core network device (14).

3. A system for determining coverage level, comprising a terminal (11), a source base station (12) and a target base station (13), **characterized in that**
the terminal (11) is configured to perform method of:
receiving (S701) measurement information sent from the source base station, and measuring a first measurement signal of a target cell according to the measurement information;
sending (S702) a first measurement report to the source base station (12), wherein the first measurement report includes a measurement result of the first measurement signal; and
receiving (S703) an initial coverage level of the terminal in the target cell sent from the source base station, and initiating random access to a physical resource in the target base station corresponding to a coverage level specified by the initial coverage level;
the source base station (12) is configured to perform method of:
sending (S601) the measurement information to the terminal (11);
receiving (S602) the first measurement report reported by the terminal (11);
send (S603) the first measurement report to the target base station (13); and
receive (S604) the initial coverage level of the terminal in the target cell sent from the target base station, and sending the initial coverage level to the terminal (11);
the target base station (13) is configured to perform method of:
receiving (S201) the first measurement report from the source base station;
determining (S202) the initial coverage level of a terminal in the target cell according to the first measurement report and preset measurement signal thresholds corresponding to different coverage levels;
sending (S203) the initial coverage level to the source base station;
obtaining (S304) an actual coverage level of the terminal in the target cell; judging (S305) whether the actual coverage level is consistent with the initial coverage level; and in the case where the actual coverage level is not consistent with the initial coverage level, reconfiguring (S306) a physical resource and repetition times according to the actual coverage level, and sending a reconfigured physical resources and the repetition times to the terminal;
wherein the step of obtaining (304) the actual coverage level of the terminal in the target cell comprises: receiving a random access preamble sent from the terminal, and determining the actual coverage level of the terminal in the target cell according to the random access preamble and a preset range of the random access preamble corresponding to different coverage levels.

4. The system of claim 3, wherein the obtaining (S703) and initiating a random access to a physical resource in the target base station comprises the terminal (11) being further configured to perform the method of:
receiving the initial coverage level of the terminal in the target cell sent from the source base station, obtaining a coverage level according to the initial coverage level, and initiating contention-based random access to the physical resource corresponding to the coverage level in the target base station by adopting a random access preamble corresponding to the coverage level.

5. The system of claim 3 or 4, wherein after the step of initiating the random access to the physical resource in the target base station corresponding to the coverage level specified by the initial coverage level, the terminal (11) is further configured to perform the method of:
measuring a second measurement signal of the target cell;
determining an actual coverage level of the terminal in the target cell according to the second measurement signal and received measurement signal thresholds corresponding to different coverage levels;
judging whether the actual coverage level is consistent with the initial coverage level; and
in the case that the actual coverage level is not consistent with the initial coverage level, sending a notification message to the target base station, wherein the notification message carries the actual coverage level.

6. The system of claim 3 or 4, wherein after the step of initiating the random access to the physical resource in the target base station corresponding to the coverage level specified by the initial coverage level, the terminal (11) is further configured to perform the method of:
measuring a second measurement signal of the target cell;
determining an actual coverage level of the terminal in the target cell according to the second measurement signal and received measurement signal thresholds corresponding to different coverage levels;
judging whether the actual coverage level is consistent with the initial coverage level; and
in the case that the actual coverage level is not consistent with the initial coverage level, sending a measurement report to the target base station, wherein the measurement report carries the second measurement signal.

7. A base station (13), **characterized in that** the base station is configured to perform the method for determining coverage level according to any one of claims 1-2.

## Patentansprüche

1. Verfahren zum Bestimmen eines Abdeckungsniveaus, das durch eine Zielbasisstation (13) durchgeführt wird, **dadurch gekennzeichnet, dass** das Verfahren die folgenden Schritte umfasst:
Empfangen (S201) eines ersten Messberichts von einer Quellbasisstation, wobei der erste Messbericht ein Messergebnis von Parametern eines Messsignals einer Zielzelle einschließt;
Bestimmen (S202) eines anfänglichen Abdeckungsniveaus eines Endgeräts in der Zielzelle gemäß dem ersten Messbericht und voreingestellten Messsignalschwellenwerten, die unterschiedlichen Abdeckungsniveaus entsprechen;
Senden (S203) des anfänglichen Abdeckungsniveaus an die Quellbasisstation;
Erhalten (S304) eines tatsächlichen Abdeckungsniveaus des Endgeräts in der Zielzelle; Beurteilen (S305), ob das tatsächliche Abdeckungsniveau mit dem anfänglichen Abdeckungsniveau konsistent ist; und in dem Fall, in dem das tatsächliche Abdeckungsniveau nicht mit dem anfänglichen Abdeckungsniveau konsistent ist, Rekonfigurieren (S306) einer physischen Ressource und von Wiederholungszeiten gemäß dem tatsächlichen Abdeckungsniveau und Senden einer rekonfigurierten physischen Ressource und der Wiederholungszeiten an das Endgerät;
wobei der Schritt des Erhaltens (304) des tatsächlichen Abdeckungsniveaus des Endgeräts in der Zielzelle Folgendes umfasst: Empfangen einer Zufallszugriffspräambel, die von dem Endgerät gesendet wird, und Bestimmen des tatsächlichen Abdeckungsniveaus des Endgeräts in der Zielzelle gemäß der Zufallszugriffspräambel und einem voreingestellten Bereich der Zufallszugriffspräambel, der unterschiedlichen Abdeckungsniveaus entspricht.

2. Verfahren nach Anspruch 1, wobei der Schritt des Empfangens des ersten Messberichts der Zielzelle, der von der Quellbasisstation gesendet wird, Folgendes umfasst:
Empfangen des ersten Messberichts der Zielzelle, der von der Quellbasisstation über die X2-Schnittstelle oder die Kernnetzwerkvorrichtung (14) gesendet wird; und
der Schritt des Sendens des anfänglichen Abdeckungsniveaus an die Quellbasisstation Folgendes umfasst:
nachdem der Empfang bestätigt wurde, Senden des anfänglichen Abdeckungsniveaus an die Quellbasisstation über die X2-Schnittstelle oder die Kernnetzwerkvorrichtung (14).

3. System zum Bestimmen eines Abdeckungsniveaus, umfassend ein Endgerät (11), eine Quellbasisstation (12) und eine Zielbasisstation (13), **dadurch gekennzeichnet, dass**
das Endgerät (11) dazu konfiguriert ist, das folgende Verfahren durchzuführen:
Empfangen (S701) von Messinformationen, die von der Quellbasisstation gesendet werden, und Messen eines ersten Messsignals einer Zielzelle gemäß den Messinformationen;
Senden (S702) eines ersten Messberichts an die Quellbasisstation (12), wobei der erste Messbericht ein Messergebnis des ersten Messsignals einschließt; und
Empfangen (S703) eines anfänglichen Abdeckungsniveaus des Endgeräts in der Zielzelle, das von der Quellbasisstation gesendet wird, und Initiieren eines Zufallszugriffs auf eine physische Ressource in der Zielbasisstation, die einem Abdeckungsniveau entspricht, das durch das anfängliche Abdeckungsniveau spezifiziert ist;
die Quellbasisstation (12) dazu konfiguriert ist, das folgende Verfahren durchzuführen:
Senden (S601) der Messinformationen an das Endgerät (11);
Empfangen (S602) des ersten Messberichts, der durch das Endgerät (11) berichtet wird;
Senden (S603) des ersten Messberichts an die Zielbasisstation (13); und
Empfangen (S604) des anfänglichen Abdeckungsniveaus des Endgeräts in der Zielzelle, das von der Zielbasisstation gesendet wird, und Senden des anfänglichen Abdeckungsniveaus an das Endgerät (11);
die Zielbasisstation (13) dazu konfiguriert ist, das folgende Verfahren durchzuführen:
Empfangen (S201) des ersten Messberichts von der Quellbasisstation;
Bestimmen (S202) des anfänglichen Abdeckungsniveaus eines Endgeräts in der Zielzelle gemäß dem ersten Messbericht und voreingestellten Messsignalschwellenwerten, die unterschiedlichen Abdeckungsniveaus entsprechen;
Senden (S203) des anfänglichen Abdeckungsniveaus an die Quellbasisstation;
Erhalten (S304) eines tatsächlichen Abdeckungsniveaus des Endgeräts in der Zielzelle; Beurteilen (S305), ob das tatsächliche Abdeckungsniveau mit dem anfänglichen Abdeckungsniveau konsistent ist; und in dem Fall, in dem das tatsächliche Abdeckungsniveau nicht mit dem anfänglichen Abdeckungsniveau konsistent ist, Rekonfigurieren (S306) einer physischen Ressource und von Wiederholungszeiten gemäß dem tatsächlichen Abdeckungsniveau und Senden einer rekonfigurierten physischen Ressource und der Wiederholungszeiten an das Endgerät;
wobei der Schritt des Erhaltens (304) des tatsächlichen Abdeckungsniveaus des Endgeräts in der Zielzelle Folgendes umfasst: Empfangen einer Zufallszugriffspräambel, die von dem Endgerät gesendet wird, und Bestimmen des tatsächlichen Abdeckungsniveaus des Endgeräts in der Zielzelle gemäß der Zufallszugriffspräambel und einem voreingestellten Bereich der Zufallszugriffspräambel, der unterschiedlichen Abdeckungsniveaus entspricht.

4. System nach Anspruch 3, wobei das Erhalten (S703) und Initiieren eines Zufallszugriffs auf eine physische Ressource in der Zielbasisstation umfasst, dass das Endgerät (11) ferner dazu konfiguriert ist, das folgende Verfahren durchzuführen:
Empfangen des anfänglichen Abdeckungsniveaus des Endgeräts in der Zielzelle, das von der Quellbasisstation gesendet wird, Erhalten eines Abdeckungsniveaus gemäß dem anfänglichen Abdeckungsniveau und Initiieren eines konkurrenzbasierten Zufallszugriffs auf die physische Ressource, die dem Abdeckungsniveau in der Zielbasisstation entspricht, durch Übernehmen einer Zufallszugriffspräambel, die dem Abdeckungsniveau entspricht.

5. System nach Anspruch 3 oder 4, wobei nach dem Schritt des Initiierens des Zufallszugriffs auf die physische Ressource in der Zielbasisstation, die dem Abdeckungsniveau entspricht, das durch das anfängliche Abdeckungsniveau spezifiziert ist, das Endgerät (11) ferner dazu konfiguriert ist, das folgende Verfahren durchzuführen:
Messen eines zweiten Messsignals der Zielzelle;
Bestimmen eines tatsächlichen Abdeckungsniveaus des Endgeräts in der Zielzelle gemäß dem zweiten Messsignal und empfangenen Messsignalschwellenwerten, die unterschiedlichen Abdeckungsniveaus entsprechen;
Beurteilen, ob das tatsächliche Abdeckungsniveau mit dem anfänglichen Abdeckungsniveau konsistent ist; und
in dem Fall, in dem das tatsächliche Abdeckungsniveau nicht mit dem anfänglichen Abdeckungsniveau konsistent ist, Senden einer Benachrichtigungsnachricht an die Zielbasisstation, wobei die Benachrichtigungsnachricht das tatsächliche Abdeckungsniveau trägt.

6. System nach Anspruch 3 oder 4, wobei nach dem Schritt des Initiierens des Zufallszugriffs auf die physische Ressource in der Zielbasisstation, die dem Abdeckungsniveau entspricht, das durch das anfängliche Abdeckungsniveau spezifiziert ist, das Endgerät (11) ferner dazu konfiguriert ist, das folgende Verfahren durchzuführen:
Messen eines zweiten Messsignals der Zielzelle;
Bestimmen eines tatsächlichen Abdeckungsniveaus des Endgeräts in der Zielzelle gemäß dem zweiten Messsignal und empfangenen Messsignalschwellenwerten, die unterschiedlichen Abdeckungsniveaus entsprechen;
Beurteilen, ob das tatsächliche Abdeckungsniveau mit dem anfänglichen Abdeckungsniveau konsistent ist; und
in dem Fall, in dem das tatsächliche Abdeckungsniveau nicht mit dem anfänglichen Abdeckungsniveau konsistent ist, Senden eines Messberichts an die Zielbasisstation, wobei der Messbericht das zweite Messsignal trägt.

7. Basisstation (13), **dadurch gekennzeichnet, dass** die Basisstation dazu konfiguriert ist, das Verfahren zum Bestimmen eines Abdeckungsniveaus nach einem der Ansprüche 1-2 durchzuführen.

## Revendications

1. Procédé pour déterminer un niveau de couverture, réalisé par une station de base cible (13), **caractérisé en ce que** le procédé comprend les étapes consistant à :
recevoir (S201) un premier rapport de mesure en provenance d'une station de base source, le premier rapport de mesure incluant un résultat de mesure de paramètres d'un signal de mesure d'une cellule cible ;
déterminer (S202) un niveau de couverture initial d'un terminal dans la cellule cible selon le premier rapport de mesure et des seuils de signal de mesure prédéfinis correspondant à différents niveaux de couverture ;
transmettre (S203) le niveau de couverture initial à la station de base source ;
obtenir (S304) un niveau de couverture réel du terminal dans la cellule cible ; juger (S305) si le niveau de couverture réel est cohérent avec le niveau de couverture initial ; et dans le cas où le niveau de couverture réel n'est pas cohérent avec le niveau de couverture initial, reconfigurer (S306) une ressource physique et des temps de répétition selon le niveau de couverture réel, et transmettre une ressource physique reconfigurée et les temps de répétition au terminal ;
dans lequel l'étape d'obtenir (304) le niveau de couverture réel du terminal dans la cellule cible comprend : recevoir un préambule d'accès aléatoire transmis depuis le terminal, et déterminer le niveau de couverture réel du terminal dans la cellule cible selon le préambule d'accès aléatoire et une plage prédéfinie du préambule d'accès aléatoire correspondant à différents niveaux de couverture.

2. Procédé selon la revendication 1, dans lequel l'étape de recevoir le premier rapport de mesure de la cellule cible transmis depuis la station de base source comprend :
recevoir le premier rapport de mesure de la cellule cible transmis depuis la station de base source par l'intermédiaire de l'interface X2 ou du dispositif de réseau central (14) ; et
l'étape de transmettre le niveau de couverture initial à la station de base source comprend :
après accusé de réception, transmettre le niveau de couverture initial à la station de base source par l'intermédiaire de l'interface X2 ou du dispositif de réseau central (14).

3. Système pour déterminer un niveau de couverture, comprenant un terminal (11), une station de base source (12) et une station de base cible (13), **caractérisé en ce que**
le terminal (11) est configuré pour réaliser le procédé consistant à :
recevoir (S701) des informations de mesure transmises depuis la station de base source, et mesurer un premier signal de mesure d'une cellule cible selon les informations de mesure ;
transmettre (S702) un premier rapport de mesure à la station de base source (12), dans lequel le premier rapport de mesure inclut un résultat de mesure du premier signal de mesure ; et
recevoir (S703) un niveau de couverture initial du terminal dans la cellule cible transmis depuis la station de base source, et initier un accès aléatoire à une ressource physique dans la station de base cible correspondant à un niveau de couverture spécifié par le niveau de couverture initial ;
la station de base source (12) est configurée pour réaliser le procédé consistant à :
transmettre (S601) les informations de mesure au terminal (11) ;
recevoir (S602) le premier rapport de mesure rapporté par le terminal (11) ;
transmettre (S603) le premier rapport de mesure à la station de base cible (13) ; et
recevoir (S604) le niveau de couverture initial du terminal dans la cellule cible transmis depuis la station de base cible, et transmettre le niveau de couverture initial au terminal (11) ;
la station de base cible (13) est configurée pour réaliser le procédé consistant à :
recevoir (S201) le premier rapport de mesure en provenance de la station de base source ;
déterminer (S202) le niveau de couverture initial d'un terminal dans la cellule cible selon le premier rapport de mesure et des seuils de signal de mesure prédéfinis correspondant à différents niveaux de couverture ;
transmettre (S203) le niveau de couverture initial à la station de base source ;
obtenir (S304) un niveau de couverture réel du terminal dans la cellule cible ; juger (S305) si le niveau de couverture réel est cohérent avec le niveau de couverture initial ; et dans le cas où le niveau de couverture réel n'est pas cohérent avec le niveau de couverture initial, reconfigurer (S306) une ressource physique et des temps de répétition selon le niveau de couverture réel, et transmettre une ressource physique reconfigurée et les temps de répétition au terminal ;
dans lequel l'étape d'obtenir (304) le niveau de couverture réel du terminal dans la cellule cible comprend : recevoir un préambule d'accès aléatoire transmis depuis le terminal, et déterminer le niveau de couverture réel du terminal dans la cellule cible selon le préambule d'accès aléatoire et une plage prédéfinie du préambule d'accès aléatoire correspondant à différents niveaux de couverture.

4. Système selon la revendication 3, dans lequel obtenir (S703) et initier un accès aléatoire à une ressource physique dans la station de base cible comprend le terminal (11) étant en outre configuré pour réaliser le procédé consistant à :
recevoir le niveau de couverture initial du terminal dans la cellule cible transmis depuis la station de base source, obtenir un niveau de couverture selon le niveau de couverture initial, et initier un accès aléatoire basé sur une contention à la ressource physique correspondant au niveau de couverture dans la station de base cible en adoptant un préambule d'accès aléatoire correspondant au niveau de couverture.

5. Système selon la revendication 3 ou 4, dans lequel après l'étape d'initier l'accès aléatoire à la ressource physique dans la station de base cible correspondant au niveau de couverture spécifié par le niveau de couverture initial, le terminal (11) est en outre configuré pour réaliser le procédé consistant à :
mesurer un second signal de mesure de la cellule cible ;
déterminer un niveau de couverture réel du terminal dans la cellule cible selon le second signal de mesure et des seuils de signal de mesure reçus correspondant à différents niveaux de couverture ;
juger si le niveau de couverture réel est cohérent avec le niveau de couverture initial ; et
dans le cas où le niveau de couverture réel n'est pas cohérent avec le niveau de couverture initial, transmettre un message de notification à la station de base cible, dans lequel le message de notification transporte le niveau de couverture réel.

6. Système selon la revendication 3 ou 4, dans lequel après l'étape d'initier l'accès aléatoire à la ressource physique dans la station de base cible correspondant au niveau de couverture spécifié par le niveau de couverture initial, le terminal (11) est en outre configuré pour réaliser le procédé consistant à :
mesurer un second signal de mesure de la cellule cible ;
déterminer un niveau de couverture réel du terminal dans la cellule cible selon le second signal de mesure et des seuils de signal de mesure reçus correspondant à différents niveaux de couverture ;
juger si le niveau de couverture réel est cohérent avec le niveau de couverture initial ; et
dans le cas où le niveau de couverture réel n'est pas cohérent avec le niveau de couverture initial, transmettre un rapport de mesure à la station de base cible, dans lequel le rapport de mesure transporte le second signal de mesure.

7. Station de base (13), **caractérisée en ce que** la station de base est configurée pour réaliser le procédé pour déterminer un niveau de couverture selon l'une quelconque des revendications 1-2.
